Europäisches Patentamt

European Patent Office

Office européen des brevets

(19)

(11) Numéro de publication: **0 159 953**
**A2**

(12) **DEMANDE DE BREVET EUROPEEN**

(21) Numéro de dépôt: **85420068.0**

(22) Date de dépôt: **10.04.85**

(51) Int. Cl.⁴: **A 01 F 15/14**

(30) Priorité: **10.04.84  FR 8406008**

(43) Date de publication de la demande: **30.10.85**
**Bulletin 85/44**

(84) Etats contractants désignés: **AT BE CH DE GB IT LI LU NL SE**

(71) Demandeur: **Margaron, André, "Les Pins",**
**F-38940 Roybon (FR)**

(72) Inventeur: **Margaron, André, "Les Pins",**
**F-38940 Roybon (FR)**

(74) Mandataire: **Maureau, Bernard et al, Cabinet GERMAIN & MAUREAU 20, boulevard E. Deruelle B.P. 3011, F-69392 Lyon Cédex 03 (FR)**

(54) **Procédé et dispositif pour le liage de balles cylindriques.**

(57) Ce procédé et le dispositif pour la mise en œuvre de celui-ci sont destinés au liage de balles cylindriques formées à partir de matière fibreuse (foin, paille, fourrage, etc.): le procédé consiste à couper l'alimentation en matière fibreuse lorsqu'une balle (1) est achevée tout en continuant à la faire tourner, à introduire simultanément de la ficelle (3) à l'intérieur de la chambre de formation (8) des balles à l'aide d'au moins un distributeur (11) de ficelle animé d'un mouvement de translation parallèlement à l'axe de la balle (1) de façon à enrouler chaque ficelle (3) en hélice autour de la balle (1), à arrêter chaque distributeur (11) en fin de course, tout en laissant la balle faire au moins un tour à l'intérieur de la chambre (8) de formation des balles de façon à avoir au moins deux spires de ficelle (3) superposées enroulées autour de la balle (1), et à lier les spires superposées ensemble avant de couper chaque ficelle (3).

Selon une forme d'exécution préférée, les spires de ficelle (3) superposées sont liées ensemble par agrafage au moyen d'une agrafeuse (13).

ACTORUM AG

1

# PROCEDE ET DISPOSITIF
## POUR LE LIAGE DE BALLES CYLINDRIQUES

La présente invention a pour objet un procédé et un dispositif pour le liage de balles cylindriques formées à partir de matière fibreuse disposée en andains telle que du foin, paille, fourrage préfané à ensiler...

Actuellement, les andains de matière fibreuse (foin, paille... etc) sont ramassés et pressés, à l'aide de machines spéciales, sous forme de bottes parallélépipédiques ou de balles cylindriques.

Le liage des bottes est effectué facilement à l'aide de ficelles ou de fils de fer enroulés autour de ces bottes et dont les extrémités sont nouées ou torsadées ensemble.

Par contre, le liage des balles cylindriques, tel qu'il est réalisé actuellement, à l'aide de ficelle, ne donne pas entière satisfaction du fait du mode de formation des balles.

En effet, ces balles sont formées en enroulant la matière fibreuse sur elle-même à l'aide de convoyeurs à bande répartis sur le pourtour d'une chambre de formation des balles délimitant un espace cylindrique, cette chambre pouvant avoir un volume fixe ou variable si les convoyeurs sont montés pivotants.

Lorsque la botte atteint le diamètre et la densité désirés, les machines connues, quel que soit leur type, utilisent habituellement un dispositif d'emballage au moyen duquel une ficelle est appliquée sur la face périphérique de la balle, pendant que celle-ci continue à tourner dans la machine, l'alimentation en matière fibreuse étant arrêtée, par une ou plusieurs passes de ce dispositif qui effectue un mouvement de translation parallèlement à une génératrice de la botte, jusqu'à ce que le nombre voulu de tours de ficelle ait été atteint, la ficelle est alors coupée.

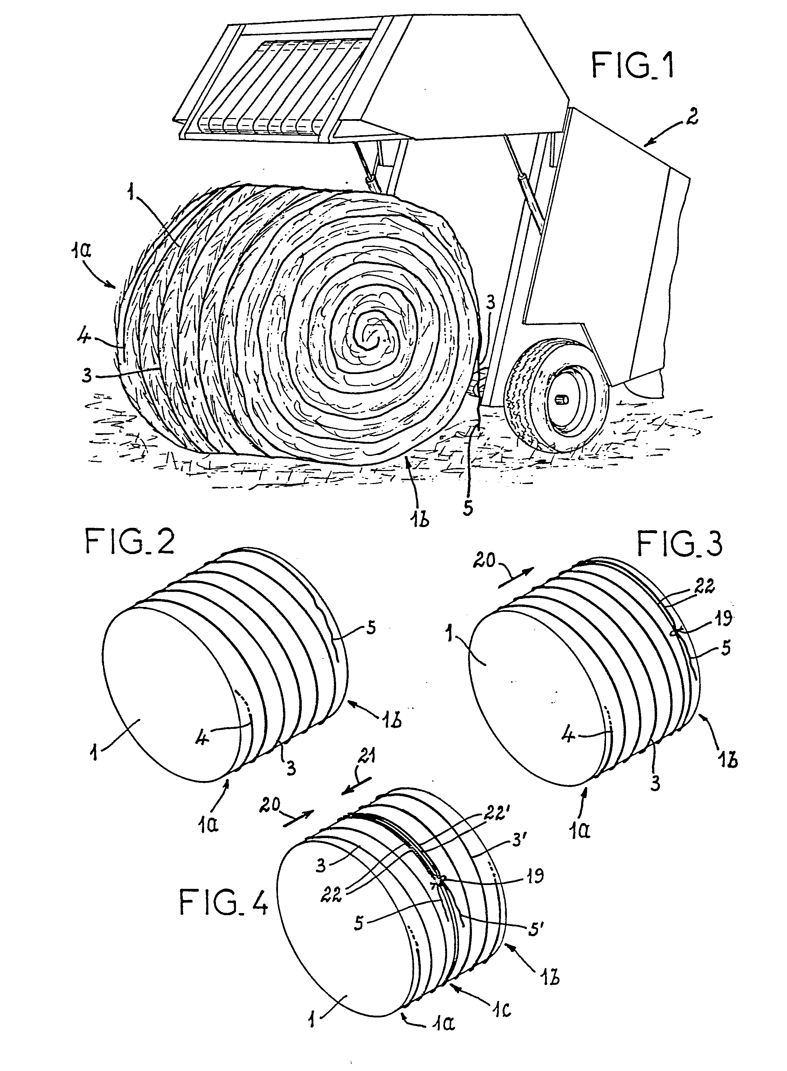

Les figures 1 et 2 sont des vues en perspective d'une balle cylindrique (1) liée à l'aide d'une ficelle (3) de la façon précitée.

Dans la figure 1, la balle (1) est montrée alors qu'elle vient d'être formée et déchargée à l'arrière d'une machine (2) pour la formation de balles cylindriques, tandis que dans la figure 2, la balle (1) est représentée, à échelle réduite et de façon plus schématique.

Ainsi que le montre notamment la figure 2, dans le mode de liage connu, la ficelle (3) est enroulée en hélice sur la balle (1). Son extrémité amont (4), c'est-à-dire l'extrémité de cette ficelle par laquelle elle est introduite dans la machine (2) au début de l'opération de liage, est noyée dans la masse de la balle (1) à une extrémité en bout (1a) de celle-ci, puisque cette balle continue à tourner en étant pressée par les convoyeurs à bande pendant l'opération de liage. Cette extrémité amont (4) est donc liée intimement à la balle (1).

Au contraire, l'extrémité aval (5) de la ficelle (3) est plus ou moins enfoncée dans la balle (1) et pend généralement librement à la périphérie de celle-ci à son autre extrémité en bout (1b), ainsi que le montre la figure 1. Comme les deux extrémités amont (4) et aval (5) de la ficelle (3) se retrouvent à chaque extrémité (1a,1b) de la balle (1), il n'est pas possible de les lier ensemble comme dans le cas des bottes parallélépipédiques.

On conçoit donc aisément que la tenue du liage ainsi réalisé soit très insuffisant et aléatoire, et qu'il arrive que ce liage se défasse lorsque la balle (1) tombe sur le sol et que cette dernière se déroule, notamment lorsque le terrain est en pente.

L'objet de la présente invention est de remédier à ces inconvénients et notamment de prévoir un procédé et dispositif pour le liage de balles cylindriques assurant un liage efficace de celles-ci.

A cet effet, le procédé selon l'invention comprend notamment les différentes phases consistant à couper l'alimentation en matière fibreuse lorsqu'une balle est achevée tout en continuant à la faire tourner, et à introduire simultanément de la ficelle à l'intérieur de la chambre de formation des balles à l'aide d'au moins un distributeur de ficelle animé d'un mouvement de translation parallèlement à l'axe de la balle de façon à enrouler chaque ficelle en hélice autour de la balle, comprend en outre les différentes phases consistant à arrêter chaque distributeur en fin de course, tout en laissant la balle faire au moins un tour à l'intérieur de la chambre de formation de balles de façon à avoir au moins deux spires de ficelle superposées enroulées autour de la balle, et à lier les spires superposées ensemble avant de couper chaque ficelle.

De cette façon, l'extrémité aval de chaque ficelle est liée à la spire précédente que fait cette ficelle et chaque ficelle est liée solidement à la balle, ses deux extrémités amont et aval étant solidaires de celle-ci, il n'y a donc plus de risque de détachage de la ou des ficelles.

3

Avantageusement, selon une variante préférée de ce procédé selon l'invention, la ficelle est introduite à l'intérieur de la chambre de formation des balles à l'aide d'au moins une paire de distributeurs de ficelle, chaque distributeur de chaque paire étant apte à se déplacer parallèlement à l'axe de la balle en sens inverse de l'autre distributeur de la paire, d'une extrémité en bout de la balle à la partie médiane de celle-ci, cette partie médiane constituant la fin de course de chaque distributeur, de façon à avoir au moins deux paires de spires de ficelle superposées, enroulées autour de la balle dans sa partie médiane et liées ensemble.

De cette façon, au moins quatre brins de ficelle sont liés ensemble, ce qui augmente la fiabilité du liage ; en outre, la durée de l'opération de liage est réduire environ de moitié puisque chaque distributeur de ficelle n'a plus qu'à se déplacer sur la moitié de la longueur de la balle.

Avantageusement encore, les spires de ficelle superposées sont liées ensemble par agrafage ; comme l'agrafage constitue un mode de liaison rapide et simple, l'opération de liage est encore écourtée.

Le dispositif de liage pour la mise en oeuvre de ce procédé selon l'invention, qui est du type comprenant au moins un distributeur de ficelle apte à se déplacer parallèlement à l'axe de la balle et à distribuer de la ficelle à l'intérieur de la chambre de formation des balles, comprend des moyens pour arrêter chaque distributeur de ficelle en fin de course de celui-ci tout en laissant la balle faire encore au moins un tour à l'intérieur de la chambre de formation des balles, un dispositif de type agrafeuse apte à venir agrafer les spires de ficelle superposées enroulées autour de la botte à l'endroit de fin de course des distributeurs, et un dispositif de type à couteau apte à couper chaque ficelle après son agrafage.

Avantageusement selon une forme de réalisation préférée de l'invention, le dispositif de liage comprend au moins une paire de distributeurs de ficelle, chaque distributeur de chaque paire étant apte à se déplacer parallèlement à l'axe de la balle en sens inverse de l'autre distributeur de la paire, d'une extrémité en bout de la balle à la partie médiane de celle-ci.

Avantageusement aussi, l'agrafeuse est montée à l'extrémité

4

de la tige d'un vérin disposé perpendiculairement à l'axe de la balle au niveau de la fin de course de chaque distributeur, la tige du vérin étant apte à se déplacer entre une position rétractée, dans laquelle l'agrafeuse se trouve en dehors de la chambre de formation des balles, et une position sortie dans laquelle l'agrafeuse est en contact avec les brins de ficelle enroulés autour de la balle.

Afin de permettre à l'agrafeuse de venir en contact avec la balle sans risque de dégradation de l'agrafeuse et malgré les irrégularités de surface de la balle, l'agrafeuse est montée élastiquement sur la tige de vérin, et notamment à l'aide d'un ressort interposé entre cette tige et l'agrafeuse.

De toute façon, l'invention sera mieux comprise et d'autres caractéristiques seront mises en évidence à l'aide de la description qui suit en référence au dessin schématique annexé représentant à titre d'exemples non limitatifs une forme d'exécution de ce dispositif de liage et des balles liées obtenues à l'aide de ce procédé et dispositif :

- Figures 3 et 4 sont des vues en perspective d'une balle liée à l'aide respectivement d'une, et de deux ficelles ;

- Figure 5 est une vue de côté de la balle de figure 4 ;

- Figure 6 est une vue en coupe longitudinale d'une machine de formation de balles équipée du dispositif de liage selon l'invention.

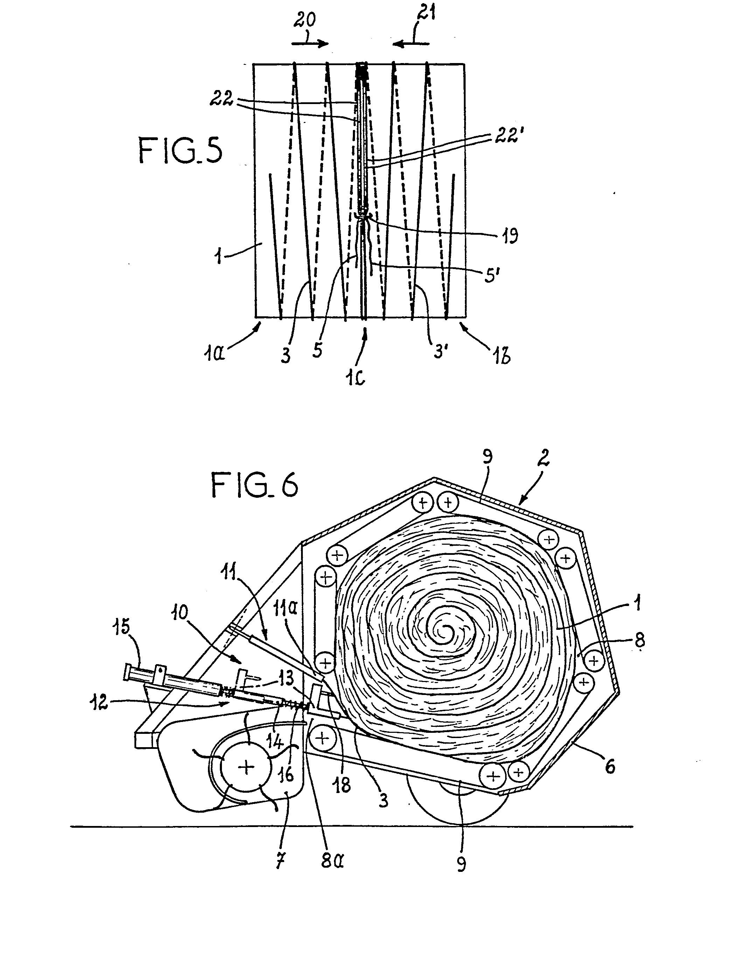

Ainsi que le montre la figure 6, la machine (2) pour la formation de balles comprend essentiellement un chassis déplaçable (6) apte à être tiré par un tracteur (non représenté). A l'extrémité avant du chassis (6) est placé un dispositif de ramassage traditionnel (7) pour une matière fibreuse disposée en andains. A l'intérieur de la machine (2) est définie une chambre (8) pour la formation des balles cylindriques (1). Sur le pourtour de cette chambre (8) sont disposés des convoyeurs à bande ou des rouleaux (9), qui coopèrent pour réaliser l'enroulement de la matière fibreuse et pour la formation des balles (1).

A l'avant du chassis (6) est également monté un dispositif de liage (10).

Ce dispositif de liage (10) comprend un ou plusieurs distributeurs de ficelle (11) montés à l'extrémité avant du chassis (6).

Chaque distributeur (11) est monté perpendiculairement à l'axe longitudinal de la balle (1) de façon à pénétrer par son extrémité (11a) à l'intérieur de la chambre (8) de formation des balles par l'ouverture (8a) de cette chambre ménagée entre les deux convoyeurs d'extrémité (9).

Chaque distributeur (11) est apte à se déplacer parallèlement à l'axe longitudinal de la balle (1) d'une extrémité à l'autre de celle-ci, ou, dans le cas de paires de distributeurs (11), d'une extrémité de la balle à sa partie médiane.

Chaque distributeur (11) distribue à l'intérieur de la chambre (8) de la ficelle (3) qui s'enroule autour de la balle (1), lorsque celle-ci continue à tourner dans la chambre (8).

Le dispositif d'agrafage (12) comprend une agrafeuse (13) de type connu, montée à l'extrémité de la tige (14) d'un vérin (15).

Le vérin (15) est monté perpendiculairement à l'axe longitudinal de la balle (1), de même que le ou les distributeurs (11). Sa tige (14) est apte à se déplacer entre une position rétractée (en traits mixtes dans la figure 6) dans laquelle l'agrafeuse est en dehors de la chambre de formation des balles (8) et une position sortie (en traits pleins) dans laquelle l'agrafeuse est en contact avec la balle (1).

Un ressort d'amortissement (16) est monté entre l'extrémité de la tige de vérin (14) et l'agrafeuse (13). Ce ressort (16) permet de compenser les irrégularités du pourtour de la balle (1) lorsque l'agrafeuse vient en contact avec celle-ci.

Un couteau (18) est solidaire de l'agrafeuse (13), un peu en retrait de celle-ci par rapport à la balle (1). Dès que l'agrafeuse (13) a posé une agrafe (19) sur la ou les ficelles (s) (3), le couteau (18) vient couper cette ou ces ficelle (s) (3) à leur sortie du ou des distributeur (s) (11).

Une pince (non représentée sur le dessin) peut être également prévue sur le dispositif de liage (10) pour venir prendre les brins de ficelle avant leur agrafage afin de faciliter celui-ci.

La figure 3 montre une balle (1) liée à l'aide d'un seul distributeur (11).

Ce distributeur se déplace parallèlement à l'axe de la balle (1) à partir de son extrémité en bout (1a), selon la flèche 20, tandis que la balle (1) continue à tourner sur elle-même. La ficelle (3) s'enroule en hélice autour de la balle (1), son extrémité amont (4) étant noyée dans la masse de celle-ci.

Lorsque le distributeur (11) arrive en fin de course, c'est-à-dire

à l'autre extrémité en bout (1b) de la balle (1) il s'arrête, tandis que la balle (1) continue à tourner sur elle-même sur au moins un tour, de façon que la ficelle (3) s'enroule sur encore au moins un tour sur la balle (1). On obtient ainsi au moins deux spires (22) de ficelle superposées enroulées autour de la balle (1). Lorsque le nombre de spires superposées désiré est obtenu, la rotation de la balle est arrêtée, afin de réaliser l'agrafage des brins de ficelle. La sortie de la tige du vérin (14) est alors commandée, de façon connue en soi, et l'agrafeuse (13) vient placer une agrafe (19) sur les deux spires (22) de la ficelle afin de les lier ensemble.

Simultanément, le couteau (18) coupe la ficelle (3). De cette façon, le brin aval (5) de la ficelle (3) est lié à la spire sous-jacente que fait cette ficelle (3) et le liage ainsi réalisé a une bonne tenue.

Il est à noter qu'avec ce procédé de liage un seul tour de ficelle autour de la balle suffit, c'est-à-dire qu'il suffit d'effectuer une seule passe du distributeur de ficelle le long de la balle, ce qui est particulièrement avantageux puisque dans les dispositifs de liage connus actuellement il est nécessaire d'effectuer plusieurs passes de ce distributeur le long de la balle afin d'avoir plusieurs tours de ficelle enroulés autour de cette balle.

Les figures 4 et 5 montrent une balle (1) liée à l'aide de deux distributeurs (11). Le processus de liage se déroule à peu près de la même façon que précédemment. Chaque distributeur (11) se déplace d'une extrémité en bout respectivement (1a,1b) de la balle jusque vers son milieu (1c), selon les flèches respectivement (20,21), et la ficelle respectivement (3,3') distribuée par ces distributeurs s'enroule en hélice autour de la balle (1).

De même que précédemment, lorsque les distributeurs arrivent en fin de course, c'est-à-dire au milieu (1c) de la balle (1), ils s'arrêtent tandis que la balle (1) continue à tourner. On obtient ainsi au moins deux paires de spires (22,22') superposés, c'est-à-dire au moins quatre spires (22,22') superposées enroulées autour de la balle (1).

L'agrafeuse (13) vient alors agrafer ces quatre spires à l'aide d'une agrafe (19), la balle étant arrêtée.

On a ainsi deux brins aval (5,5') agrafés ensemble ainsi qu'avec au moins deux autres spires (22,22'), et le liage ainsi réalisé a encore une meilleure tenue.

Bien entendu, la présente invention ne se limite pas aux seules formes d'exécution décrites ci-dessus à titre d'exemples non limitatifs, elle en embrasse au contraire toutes les formes de réalisation mettant en oeuvre des moyens similaires ou équivalents.

8

## - REVENDICATIONS -

1- Procédé pour le liage de balles cylindriques formées à partir de matière fibreuse (foin, paille, fourrage...etc) disposée en andains, comprenant notamment les différentes phases consistant à couper l'alimentation en matière fibreuse lorsqu'une balle (1) est achevée tout en continuant à la faire tourner, et à introduire simultanément de la ficelle (3,3') à l'intérieur de la chambre de formation (8) des balles à l'aide d'au moins un distributeur (11) de ficelle animé d'un mouvement de translation parallèlement à l'axe de la balle (1) de façon à enrouler chaque ficelle (3,3') en hélice autour de la balle (1), caractérisé en ce qu'il comprend en outre les différentes phases consistant à arrêter chaque distributeur (11) en fin de course, tout en laissant la balle faire au moins un tour à l'intérieur de la chambre (8) de formation des balles de façon à avoir au moins deux spires (22,22') de ficelle (3.3') superposées enroulées autour de la balle (1), et à lier les spires superposées (22,22') ensemble avant de couper chaque ficelle (3,3').

2- Procédé selon la revendication 1, caractérisé en ce que la ficelle (3,3') est introduite à l'intérieur de la chambre de formation des balles (8) à l'aide d'au moins une paire de distributeurs (11) de ficelle (3,3'), chaque distributeur (11) de chaque paire étant apte à se déplacer parallèlement à l'axe de la balle (1) en sens inverse de l'autre distributeur (11) de la paire, d'une extrémité en bout respectivement (1a,1b) de la balle à la partie médiane (1c) de celle-ci, cette partie médiane (1c) constituant la fin de course de chaque distributeur (11), de façon à avoir au moins deux paires de spires (22,22') de ficelles (3,3') superposées, enroulées autour de la balle (1) dans sa partie médiane (1c) et liées ensemble.

3- Procédé selon l'une des revendications 1 ou 2, caractérisé en ce que les spires (22,22') de ficelle (3,3') superposées sont liées ensemble par agrafage.

4- Dispositif pour la mise en oeuvre du procédé selon les revendications 1 et 3, du type comprenant au moins un distributeur (11) de ficelle (3.3') apte à se déplacer parallèlement à l'axe de la balle (1) et à distribuer de la ficelle (3,3') à l'intérieur de la chambre (8) de formation des balles, caractérisé en ce qu'il comprend des moyens pour arrêter chaque distributeur de ficelle (11) en fin de course de celui-ci tout en laissant la balle (1) faire encore au moins un tour à l'intérieur de la chambre (8) de formation des balles, un dispositif de type agrafeuse (12) apte à venir agrafer ensemble les spires (22,22') de ficelle (3,3') superposées enroulées autour de la botte (1) à l'endroit de fin de course des distributeurs (11), et un dispositif de type à couteau (18) apte à couper chaque ficelle (3,3') après son agrafage.

5- Dispositif pour la mise en oeuvre du procédé selon les revendications 2 et 3, du type comprenant au moins un distributeur (11) de ficelle (3,3') apte à se déplacer parallèlement à l'axe de la balle (1) et à distribuer de la ficelle (3,3') à l'intérieur de la chambre (8) de formation des balles, caractérisé en ce qu'il comprend au moins une paire de distributeurs (11) de ficelle (3,3'), chaque distributeur (11) de chaque paire étant apte à se déplacer parallèlement à l'axe de la balle (1) en sens inverse de l'autre distributeur (11) de la paire, d'une extrémité en bout respectivement (1a,1b) de la balle à la partie médiane (1c) de celle-ci et en ce qu'il comprend des moyens pour arrêter chaque distributeur de ficelle (11) en fin de course de celui-ci tout en laissant la balle (1) faire encore au moins un tour à l'intérieur de la chambre (8) de formation des balles, un dispositif de type agrafeuse (12) apte à venir agrafer ensemble les spires (22,22') de ficelle (3,3') superposées enroulées autour de la botte (1) à l'endroit de fin de course des distributeurs (11), et un dispositif de type à couteau (18) apte à couper chaque ficelle (3,3') après son agrafage.

6- Dispositif selon l'une des revendications 4 et 5, caractérisé en ce que le dispositif de type agrafeuse (12) comprend une agrafeuse (13) montée à l'extrémité de la tige (14) d'un vérin (15) disposé perpendiculairement à l'axe de la balle (1) au niveau de la fin de course de chaque distributeur (11), la tige (14) du vérin (15) étant apte à se déplacer entre une position rétractée, dans laquelle l'agrafeuse (13) se trouve en dehors de la chambre (8) de formation des balles, et une position sortie dans laquelle l'agrafeuse est en contact avec les brins de ficelle (22,22') enroulés autour de la balle (1).

7- Dispositif selon la revendication 6, caractérisé en ce que l'agrafeuse (13) est montée élastiquement sur la tige (14) de vérin (15).

8- Dispositif selon la revendication 7, caractérisé en ce qu'un ressort (16) est monté entre l'extrémité de la tige (14) de vérin (15) et l'agrafeuse (13).

10

9- Dispositif selon l'une quelconque des revendications 4 à 8, caractérisé en ce qu'il est prévu sur le dispositif de liage (10) une pince apte à venir prendre les brins de ficelle (22,22') avant leur agrafage.

FIG_1

FIG_2

FIG_3

FIG_4

FIG.5

FIG.6